# EUROPEAN PATENT APPLICATION

(11) **EP 4 738 087 A1**
(43) Date of publication of application: **06.05.2026**
(21) Application number: 24843563.8
(22) Date of filing: 19.07.2024
(51) Int. Cl.: G06F 3/0486, G06F 3/04842, G06F 3/041, G06F 3/0488

(54) **METHOD FOR PROCESSING PLURALITY OF USER INPUTS AND ELECTRONIC DEVICE SUPPORTING SAME**

(30) Priority: 20.07.2023 KR 20230094879; 02.01.2024 KR 20240000166
(71) Applicant: Samsung Electronics Co., Ltd., Suwon-si, Gyeonggi-do 16677 (KR)
(72) Inventor: KANG, Bogyung, Suwon-si, Gyeonggi-do 16677 (KR); KIM, Hyunho, Suwon-si, Gyeonggi-do 16677 (KR); KIM, Sangheon, Suwon-si, Gyeonggi-do 16677 (KR); CHO, Junhee, Suwon-si, Gyeonggi-do 16677 (KR); LIM, Yeunwook, Suwon-si, Gyeonggi-do 16677 (KR)
(74) Representative: HGF
(86) International application number: PCT/KR2024/010504
(87) International publication number: WO 2025/018852

(57) **Abstract**

An electronic device comprising a display, a memory, and at least one processor is disclosed. The at least one processor may be configured to: display an execution screen of a first application, which includes at least one first object; receive a user input for dragging the at least one first object; while receiving the user input for dragging the at least one first object, display an execution screen of a second application, which includes at least one second object; receive a second user input for the at least one second object; display an execution screen of a third application on the basis of reception of the second user input; and receive a user input for dropping the at least one first object on the execution screen of the third application.

## Description

### [Technical Field]

Embodiments of the disclosure relate to a method for processing a plurality of user inputs and an electronic device supporting the same.

### [Background Art]

In response to the advance of digital convergence that is a fusion of various information and communication technologies, electronic devices are providing various functions and/or various services associated with them. Accordingly, various types of user inputs for operating the functions and/or services have been proposed. For example, the electronic device can support a drag-and-drop input on a visual object. In response to a drag input on a visual object, the electronic device can change the position of the visual object, and in response to a drop input at the changed position, the electronic device can move and/or copy data related to the visual object.

The above-described information may be provided as related art for the purpose of helping understanding of the disclosure. No claim or determination is made as to whether any of the above-described contents may be applied as prior art related to the disclosure.

### [Disclosure of Invention]

### [Technical Solution]

An electronic device of an embodiment of the disclosure may include a display, a memory, and at least one processor electrically connected to the display and the memory.

According to an embodiment of the disclosure, the at least one processor may be configured to control the display to display an execution screen of a first application including at least one first object among a plurality of applications stored in the memory, receive a user input for dragging the at least one first object via the display, while receiving the user input for dragging the at least one first object, control the display to display an execution screen of a second application including at least one second object among the plurality of applications stored in the memory, receive a second user input on the at least one second object via the display, control the display to display an execution screen of a third application, based on receiving the second user input, and receive a user input for dropping the at least one first object on the execution screen of the third application via the display.

According to an embodiment of the disclosure, the user input for dragging the at least one first object may be a first portion of a first user input for performing a first drag and drop of the at least one first object, and the user input for dropping the at least one first object may be a second portion of the first user input for performing the first drag-and-drop of the at least one first object.

A method for processing a plurality of user inputs in an electronic device of an embodiment of the disclosure may include controlling a display of the electronic device to display an execution screen of a first application including at least one first object among a plurality of applications stored in a memory of the electronic device, receiving a user input for dragging the at least one first object via the display, while receiving the user input for dragging the at least one first object, controlling the display to display an execution screen of a second application including at least one second object among the plurality of applications stored in the memory, receiving a second user input on the at least one second object via the display, controlling the display to display an execution screen of a third application by using the display, based on receiving the second user input, and receiving a user input for dropping the at least one first object on the execution screen of the third application via the display.

According to an embodiment of the disclosure, the user input for dragging the at least one first object may be a first portion of a first user input for performing a first drag-and-drop of the at least one first object, and the user input for dropping the at least one first object may be a second portion of the first user input for performing the first drag-and-drop of the at least one first object.

A computer-readable recording medium recording a program for executing a method for processing a plurality of user inputs in an electronic device of an embodiment of the disclosure, wherein the program may execute controlling a display of the electronic device to display an execution screen of a first application including at least one first object among a plurality of applications stored in a memory of the electronic device, receiving a user input for dragging the at least one first object via the display, while receiving the user input for dragging the at least one first object, controlling the display to display an execution screen of a second application including at least one second object among the plurality of applications stored in the memory, receiving a second user input on the at least one second object via the display, controlling the display to display an execution screen of a third application by using the display, based on receiving the second user input, and receiving a user input for dropping the at least one first object on the execution screen of the third application via the display.

According to an embodiment of the disclosure, the user input for dragging the at least one first object may be a first portion of a first user input for performing a first drag-and-drop of the at least one first object, and the user input for dropping the at least one first object may be a second portion of the first user input for performing the first drag-and-drop of the at least one first object.

### [Brief Description of Drawings]

FIG. 1 is a diagram illustrating an electronic device in a network environment according to various embodiments.
FIG. 2 is a diagram illustrating an electronic device having a foldable form factor according to an embodiment.
FIG. 3 is a diagram illustrating components of an electronic device according to an embodiment.
FIG. 4 is a diagram illustrating a first user input and a second user input received while a first application is executed by an electronic device, according to an embodiment.
FIG. 5 is a diagram illustrating a signal flow related to processing of a first user input and a second user input received while a first application is executed by an electronic device, according to an embodiment.
FIG. 6 is a diagram illustrating a first user input received while a first application is executed by an electronic device, according to an embodiment.
FIG. 7 is a diagram illustrating a signal flow related to processing of a first user input received while a first application is executed by an electronic device, according to an embodiment.
FIG. 8 is a diagram illustrating a first user input received while a first application is executed by an electronic device and a second user input received while the execution of the first application is converted to the execution of a second application, according to an embodiment.
FIG. 9 is a diagram illustrating an example of a signal flow related to processing of a first user input received while a first application is executed by an electronic device and a second user input received while the execution of the first application is converted to the execution of a second application, according to an embodiment.
FIG. 10 is a diagram illustrating another example of a signal flow related to processing of a first user input received while a first application is executed by an electronic device and a second user input received while the execution of the first application is converted to the execution of a second application, according to an embodiment.
FIG. 11 is a diagram illustrating a first user input received while a first application is executed by an electronic device and a second user input received while a second application is executed, according to an embodiment.
FIG. 12 is a diagram illustrating an example of a signal flow related to processing of a first user input received while a first application is executed by an electronic device and a second user input received while a second application is executed, according to an embodiment.
FIG. 13 is a diagram illustrating another example of a signal flow related to processing of a first user input received while a first application is executed by an electronic device and a second user input received while a second application is executed, according to an embodiment.
FIG. 14 is a diagram illustrating a first operation scenario of an electronic device for processing a plurality of user inputs, according to an embodiment.
FIG. 15 is a diagram illustrating a second operation scenario of an electronic device for processing a plurality of user inputs, according to an embodiment.
FIG. 16 is a diagram illustrating a third operation scenario of an electronic device for processing a plurality of user inputs, according to an embodiment.
FIG. 17 is a diagram illustrating a fourth operation scenario of an electronic device for processing a plurality of user inputs, according to an embodiment.
FIG. 18 is a diagram illustrating a fifth operation scenario of an electronic device for processing a plurality of user inputs, according to an embodiment.
FIG. 19 is a diagram illustrating a sixth operation scenario of an electronic device for processing a plurality of user inputs, according to an embodiment.

In connection with the description of the drawings, the same or similar reference numerals may be used for the same or similar components.

### [Mode for the Invention]

Various embodiments of the disclosure are described below with reference to the accompanying drawings. However, these are not intended to limit the disclosure to specific embodiment forms, and should be understood as including various modifications, equivalents, and/or alternatives of the embodiments of the disclosure.

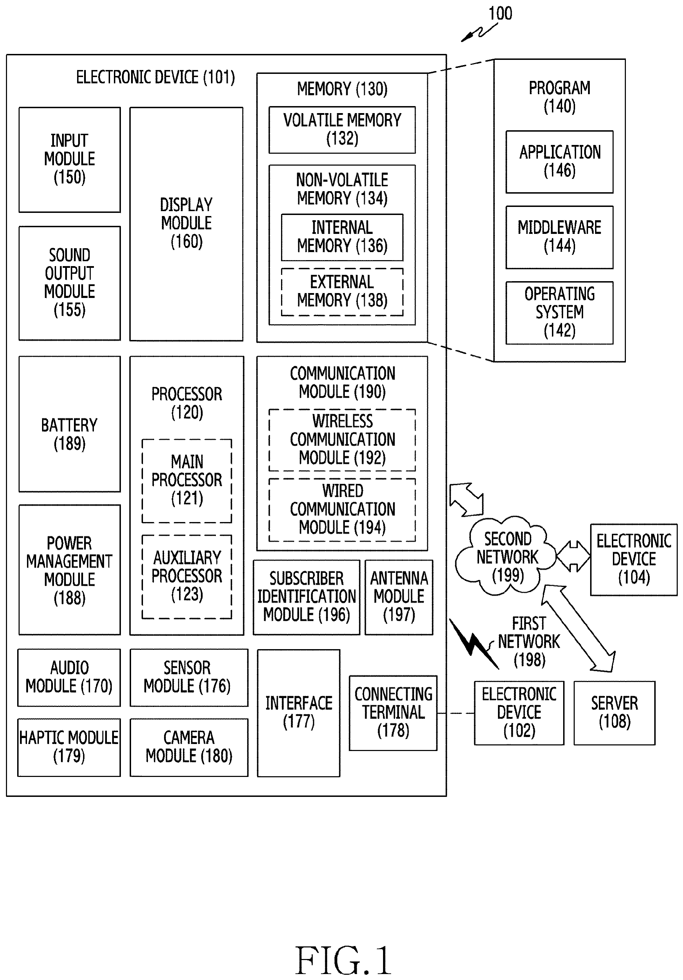

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

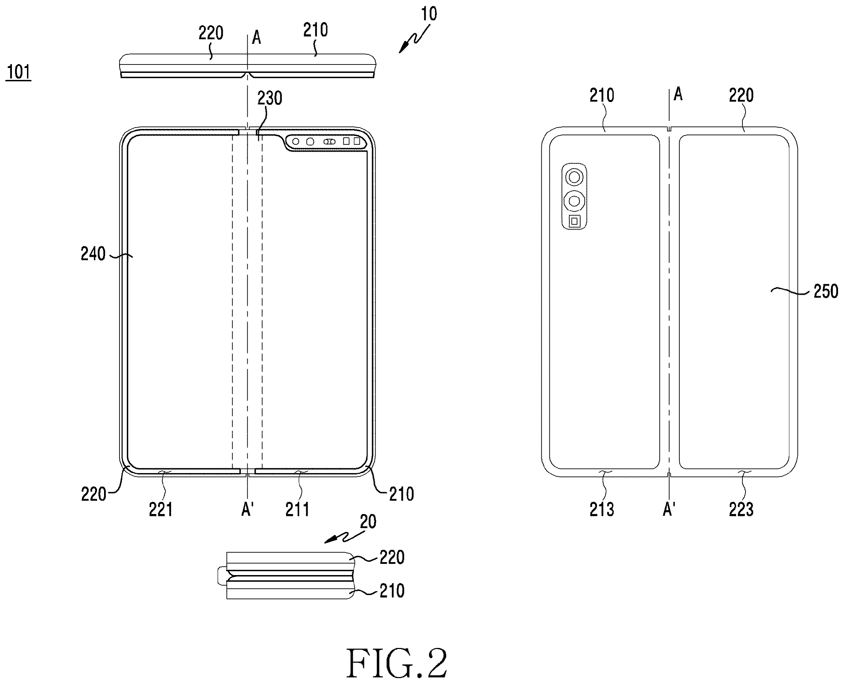

A form factor of an electronic device to which various embodiments of the disclosure may be applied is described below with reference to FIG. 2.

FIG. 2 is a diagram illustrating an electronic device having a foldable form factor according to an embodiment.

Referring to FIG. 2, an electronic device 101 of an embodiment may include a foldable type electronic device that includes a first housing 210, a second housing 220, a first display 240, and a second display 250. According to an embodiment, an external exposure state of the first display 240 and a state (e.g., unfolded state or folded state) of the electronic device 101 may be changed based on an angle (or relative distance) formed by the first housing 210 and the second housing 220.

In an embodiment, the first housing 210 may include a first surface 211 and a second surface 213 opposite the first surface 211, and the second housing 220 may include a third surface 221 and a fourth surface 223 opposite the third surface 221. According to an embodiment, the first surface 211 of the first housing 210 and the third surface 221 of the second housing 220 may form at least a portion of a front surface of the electronic device 101, and the second surface 213 of the first housing 210 and the fourth surface 223 of the second housing 220 may form at least a portion of a back surface of the electronic device 101.

In an embodiment, the first housing 210 and the second housing 220 may be connected based on at least one hinge (or hinge structure) arranged in a folding area 230, and may be arranged in a symmetrical shape at both sides of a folding axis (A-A'). In an embodiment, the electronic device 101 may further include a hinge cover for covering (or shielding) the at least one hinge arranged in the folding area 230. The hinge cover may be at least partially covered by at least one of the first housing 210 and the second housing 220 or be at least partially exposed to the outside between the first housing 210 and the second housing 220, depending on the state (e.g., unfolded state or folded state) of the electronic device 101.

In an embodiment, the first surface 211 of the first housing 210 and the third surface 221 of the second housing 220 may form a recess (or trough) for accommodating the first display 240. According to an embodiment, at least a portion of the first display 240 may be accommodated in the recess and be arranged across the first surface 211 of the first housing 210 and the third surface 221 of the second housing 220, thereby constituting (or occupying) most of the front surface of the electronic device 101. According to an embodiment, at least a portion of the second display 250 may be disposed on the fourth surface 223 of the second housing 220, thereby constituting (or occupying) a portion of the back surface of the electronic device 101.

In an embodiment, the first housing 210 and the second housing 220 may be arranged to be unfolded based on the at least one hinge such that the first surface 211 of the first housing 210 and the third surface 221 of the second housing 220 form an angle within a first angle range (e.g., about 180 degrees) and face substantially the same direction (e.g., front of the electronic device 101). In this case, at least a portion of the first display 240 may be exposed to the outside, and the electronic device 101 may have an unfolded state 10.

In an embodiment, the first housing 210 and the second housing 220 may be arranged to be folded based on the at least one hinge such that the first surface 211 of the first housing 210 and the third surface 221 of the second housing 220 form an angle within a second angle range (e.g., angle between about 0 degree and about 10 degrees) and face each other (or are in contact with each other). In this case, the first display 240 may not be exposed to the outside, and the electronic device 101 may have a folded state 20.

In an embodiment, when the electronic device 101 has the folded state 20, the fourth surface 223 of the second housing 220 that forms a portion of the back surface of the electronic device 101 in the unfolded state 101 may form the front surface of the electronic device 101. In this case, the second display 250 disposed on the fourth surface 223 of the second housing 220 and exposed to the outside toward the rear of the electronic device 101 may be exposed to the outside toward the front of the electronic device 101.

According to various embodiments, the first display 240 may be referred to as a flexible display and/or a foldable display in that at least a portion of the first display 240 is unfolded or folded depending on the state (e.g., unfolded state 10 or folded state 20) of the electronic device 101.

Although the electronic device having the foldable form factor has been described via the embodiment of FIG. 2, electronic devices to which various embodiments of the disclosure may be applied are not limited to the foldable form factor. For example, the electronic devices to which various embodiments of the disclosure may be applied may be implemented as various form factors (e.g., tablet form factors and/or non-foldable form factors) as long as the electronic devices support at least an interface (e.g., display) capable of receiving a user input.

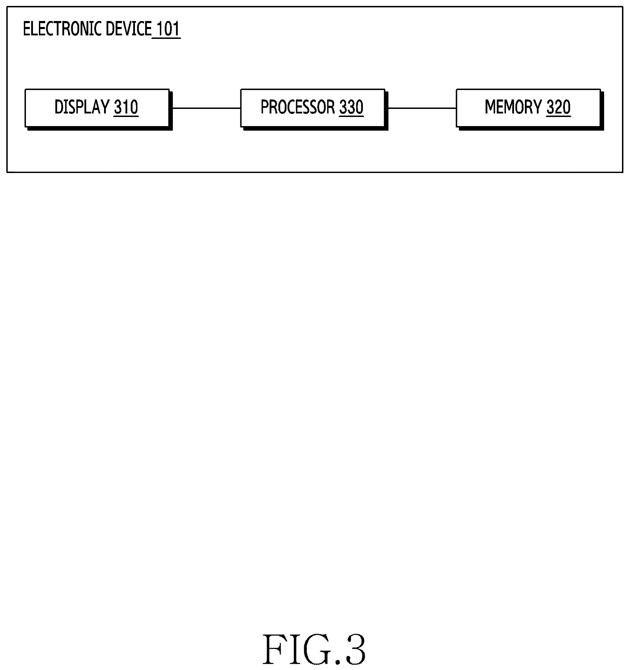

FIG. 3 is a diagram illustrating components of an electronic device according to an embodiment.

Referring to FIG. 3, an electronic device 101 of an embodiment may include a display 310 (e.g., display module 160 of FIG. 1, first display 240 of FIG. 2, and/or second display 250 of FIG. 2), a memory 320 (e.g., memory 130 of FIG. 1), and at least one processor 330 (e.g., processor 120 of FIG. 1). In various embodiments, the electronic device 101 may omit at least some of the above-described components or may further include other additional components. For example, the electronic device 101 may further include at least some of the components of the electronic device mentioned via the embodiment of FIG. 1.

In an embodiment, the display 310 may be at least partially exposed to the outside of the electronic device 101 and visually provide various contents. For example, the display 310 may display various graphical user interfaces provided by a system and/or application of the electronic device 101. Furthermore, the display 310 may receive various types of user inputs. For example, the display 310 may include a touch panel (or touch sensor) in some layers, and may detect user inputs, based on the touch panel. In this respect, the display 310 may also be referred to as a touch screen display.

In an embodiment, the memory 320 may store at least one piece of data related to the operation of the electronic device 101, or store at least one instruction related to functional operations of components of the electronic device 101. In addition, the memory 320 may store a plurality of applications, and the plurality of applications may include at least one of an application mounted in a preload form at manufacturing the electronic device 101 and an application downloaded in a third party form from an online market.

In an embodiment, the at least one processor 330 may execute code (e.g., instruction) of a programming language stored in the memory 310 and control various functions or operations of the electronic device 101. For example, the at least one processor 330 may be electrically connected to components of the electronic device 101, and transfer (or transmit) at least one command, signal, and/or data involved in performing the functions or operations of the electronic device 101, to the relevant components.

Hereinafter, in the embodiments described with reference to the drawings, a drag on at least one object may be referred to as a first portion of a user input for dragging and dropping the at least one object, and a drop on the at least one object may be referred to as a second portion of the user input for dragging and dropping the at least one object. That is, the user input for dragging and dropping the at least one object may include a combination of the first portion (or first operation) performing the drag and the second portion (or second operation) performing the drop after the drag (or drag and hold).

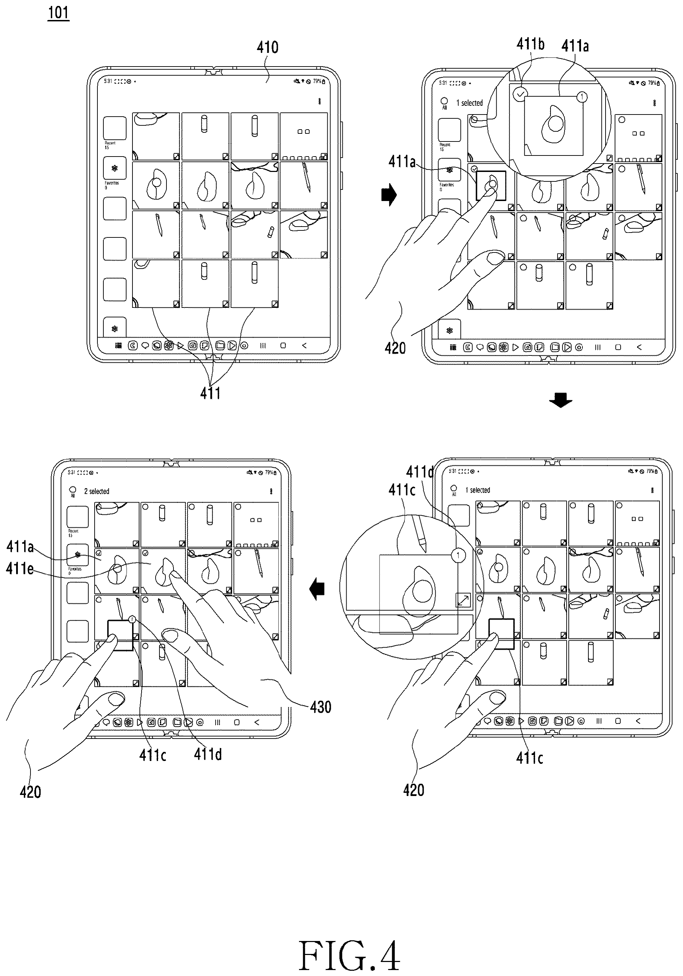

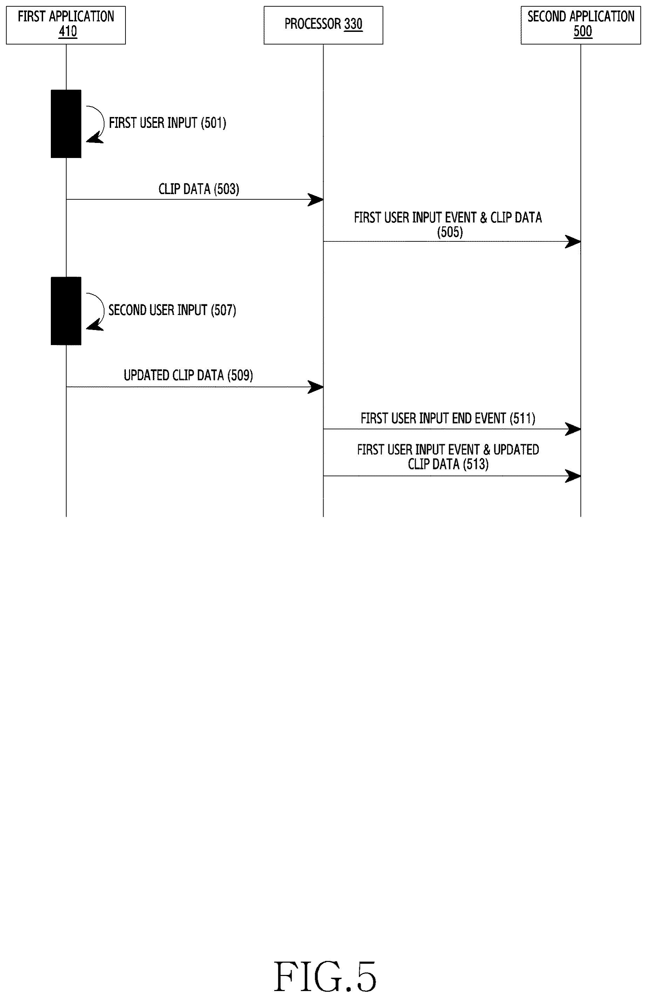

FIG. 4 is a diagram illustrating a first user input and a second user input received while a first application is executed by an electronic device, according to an embodiment. FIG. 5 is a diagram illustrating a signal flow related to processing the first user input and the second user input received while the first application is executed by the electronic device, according to an embodiment.

Hereinafter, when the embodiment of FIG. 5 is described, the embodiment of FIG. 4 may be referred to together. In addition, the operations of the electronic device mentioned in the embodiment of FIG. 5 may be performed sequentially, but may not necessarily be performed sequentially. For example, the order of the operations mentioned in the embodiment of FIG. 5 may be changed, or at least two operations may be performed in parallel.

Referring to FIGS. 4 and 5, at least one processor 330 of an electronic device 101 of an embodiment may display an execution screen 410 of a first application via a display (e.g., display 310 of FIG. 3). In an embodiment, the execution screen 410 of the first application may include a plurality of objects 411 to which a drag-and-drop input may be applied. For example, the execution screen 410 of the first application may display the plurality of objects 411 including at least one of a still image, a video (or preview image of the video), a text, an application icon, a file, a symbol, a software menu, and/or a software button.

In operation 501, the at least one processor 330 may receive a first user input 420 on the execution screen 410 of the first application via the display 310. For example, the at least one processor 330 may receive a first user input 420 for selecting at least one first object 411a among the plurality of objects 411 and dragging (or dragging and holding) at least one first object 411c grouped by the selection.

In an embodiment, when the at least one first object 411a is plural, the selecting of the plurality of first objects may be determined by a user input for touching each of the plurality of first objects via a menu (e.g., selection menu) provided by the execution screen 410 of the first application. Alternatively, when the at least one first object 411a is one, the selecting of one first object may be determined by a user input for touching and pressing (or touching and holding) the corresponding object. In an embodiment, the at least one processor 330 may control the display 310 to display a first visual object 411b indicating the selection in a screen area occupied by the at least one first object 411a, based on touching or touching and pressing the at least one first object 411a. In addition, the at least one processor 330 may control the display 310 to display a second visual object 411d indicating the total number of grouped objects in a screen area occupied by the grouped at least one first object 411c, based on dragging the at least one first object 411c grouped by the selection.

In an embodiment, the first user input 420 may include a combination of an operation of touching (e.g., selecting) or touching and pressing (e.g., selecting) the at least one first object 411a and an operation of moving (e.g., dragging) the at least one first object 411c grouped by the selection. Alternatively, the first user input 420 may include a combination of an operation of touching (e.g., selecting) or touching and pressing (e.g., selecting) the at least one first object 411a, an operation of moving (e.g., dragging) the at least one first object 411c grouped by the selection, and an operation of pausing (e.g., holding) the movement of the grouped at least one first object 411c in a specific position dependent on the movement.

In operations 503 and 505, the at least one processor 330 of an embodiment may obtain clip data, and transfer (or transmit) a drag event of the first user input 420, together with the clip data, to at least one second application 500. For example, the at least one processor 330 may obtain clip data about each of the grouped at least one first object 411c from the first application 410, and transfer the clip data and the drag event to the at least one second application 500. According to an embodiment, the at least one second application 500 may be an application that may be executed in a background state while the first application 410 is executed in a foreground state and thus receive a drop of the grouped at least one first object 411c of the first user input 420.

In operation 507, while receiving the first user input 420 (or while the first user input 420 is maintained), the at least one processor 330 of an embodiment may receive a second user input 430 on the execution screen 410 of the first application via the display 310. For example, the at least one processor 330 may receive a touch-based second user input 430 for additionally selecting at least one object 411e other than the selected at least one first object 411a among the plurality of objects 411 provided by the execution screen 410 of the first application, or deselecting at least some of the selected at least one first object 411a. In an embodiment, the at least one processor 330 may update the grouped at least one first object 411c, based on receiving the second user input 430, and control the display 310 such that the second visual object 411d indicates the total number of grouped objects depending on the update.

In operations 509 and 511, the at least one processor 330 of an embodiment may obtain the updated clip data, and transfer (or transmit) an end event of a drag of the first user input 420 to the at least one second application 500. For example, the at least one processor 330 may obtain the updated clip data about each of the updated and grouped at least one first object 411c from the first application 410. Also, for example, the at least one processor 330 may generate an end event indicating the end of a drag of the first user input 420, based on obtaining the updated clip data, and transfer the end event of the drag to the at least one second application 500.

In operation 513, the at least one processor 330 of an embodiment may transfer (or transmit) the updated clip data, and the drag event of the first user input 420, to the at least one second application 500. In this regard, the at least one processor 330 may generate a drag event of the first user input 420 in which the second user input 430 is reflected. For example, the at least one processor 330 may generate a drag event of the first user input 420 on the grouped at least one first object 411c that is updated depending on the second user input 430, and transfer the updated clip data, together with the generated drag event of the first user input 420, to the at least one second application 500.

In the embodiments of FIGS. 4 and 5, even if at least one first object is changed while a drag on the at least one first object is performed, the electronic device of an embodiment may support performing a drop on the changed at least one first object, by generating an event indicating the end of a drag before the change and an event indicating the start of a drag after the change.

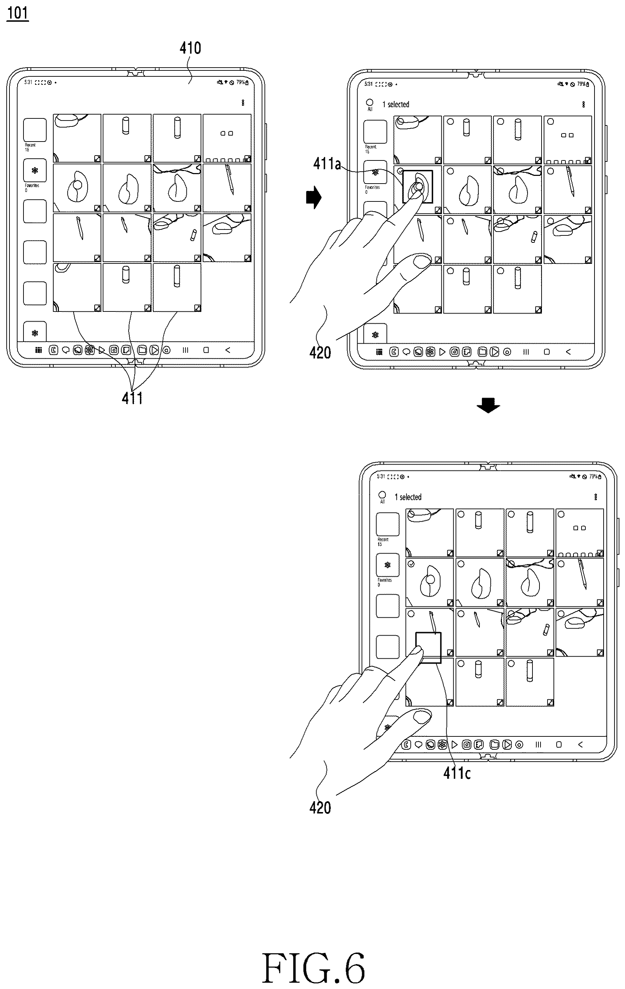

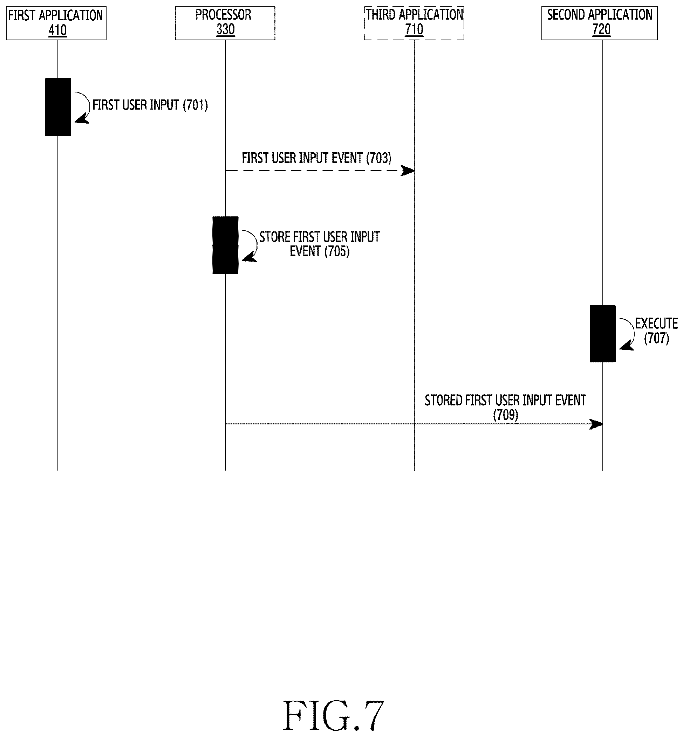

FIG. 6 is a diagram illustrating a first user input received while a first application is executed by an electronic device, according to an embodiment. FIG. 7 is a diagram illustrating a signal flow related to processing of the first user input received while the first application is executed by the electronic device, according to an embodiment.

Hereinafter, when the embodiment of FIG. 7 is described, the embodiment of FIG. 6 may be referred to together. In addition, the operations of the electronic device mentioned in the embodiment of FIG. 7 may be performed sequentially, but may not necessarily be performed sequentially. For example, the order of the operations mentioned in the embodiment of FIG. 7 may be changed, or at least two operations may be performed in parallel. In addition, at least some of the operations of the electronic device (or processor) mentioned via the embodiments of FIGS. 6 and 7 may be identical or similar to the operations of the electronic device (or processor) described via the preceding drawings, and repeated descriptions of the identical or similar operations may be omitted below.

Referring to FIGS. 6 and 7, in operation 701, while displaying an execution screen 410 of a first application via a display (e.g., display 310 of FIG. 3), at least one processor 330 of an electronic device 101 of an embodiment may receive a first user input 420 on at least one first object 411a among a plurality of objects 411 provided by the execution screen 410 of the first application. For example, the at least one processor 330 may receive a first user input 420 for selecting (e.g., touching, or touching and pressing) the at least one first object 411a and dragging (or dragging and holding) at least one first object 411c grouped by the selection.

In operation 703, the at least one processor 330 of an embodiment may transfer (or transmit) a drag event of the first user input 420 to at least one third application 710, based on receiving the first user input 420. For example, the at least one processor 330 may transfer a drag event to the at least one third application 710 that is being executed in a background state while the first application 410 is being executed in a foreground state.

In various embodiments, when the at least one third application 710 executed in the background state does not exist, or when the at least one third application 710 executed in the background state exists but an event listener (or event handler) is not being executed within the corresponding application, the at least one processor 330 may not perform transferring the drag event of the first user input 420 of operation 703.

In operation 705, the at least one processor 330 of an embodiment may at least temporarily store the drag event of the first user input 420, based on receiving the first user input 420. For example, the at least one processor 330 may at least temporarily store the drag event in a framework area of the first application 410.

In operation 707, while receiving the first user input 420 (or while the first user input 420 is maintained), the at least one processor 330 of an embodiment may execute at least one second application 720, based on a separate user input or a routine defined in the electronic device 101. According to an embodiment, the at least one second application 720 may be an application that does not receive a transfer of the drag event of the first user input 420 from the at least one processor 330, as not being executed in the background state while the first application 410 is executed in the foreground state.

In operation 709, the at least one processor 330 of an embodiment may transfer (or transmit) the drag event of the first user input 420 at least temporarily stored in the framework area of the first application 410, to the at least one second application 720, based on the execution of the at least one second application 720. Based on this, the at least one second application 720 may operate as an application of a state that may receive a drop of the grouped at least one first object 411c as receiving a transfer of the drag event of the first user input 420.

In the embodiments of FIGS. 6 and 7, even if the second application is executed while a drag on at least one first object is performed in the first application, the electronic device of an embodiment may support performing a drop on the at least one first object in the second application by using the at least temporarily stored drag event.

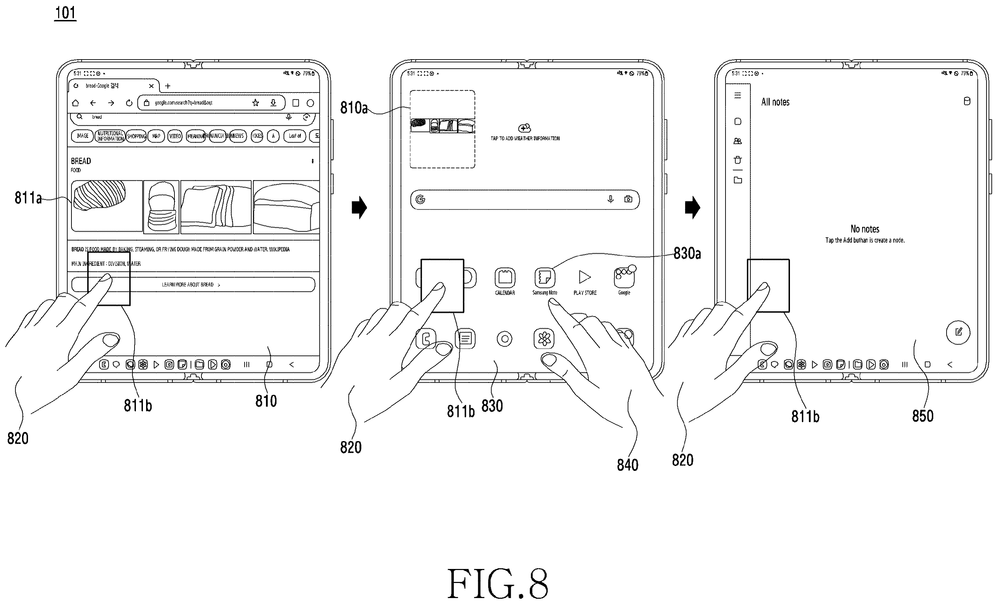

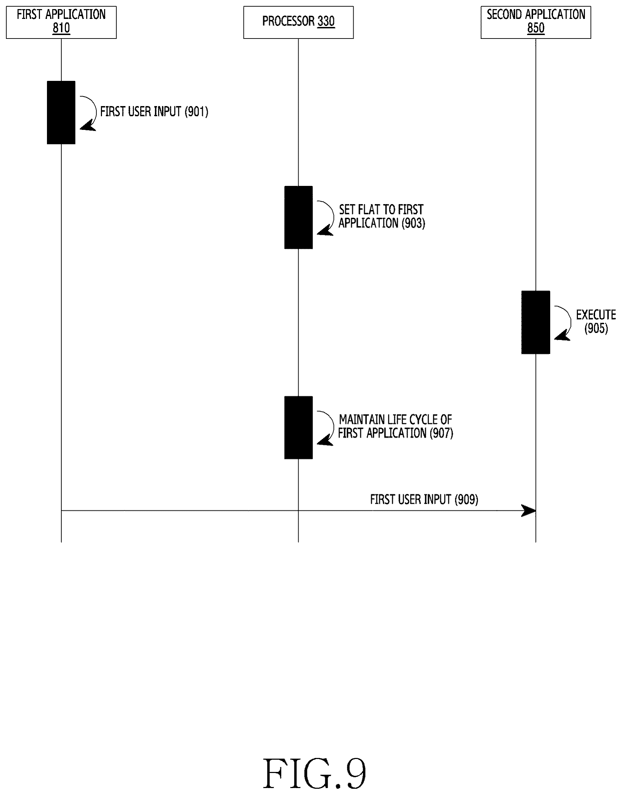

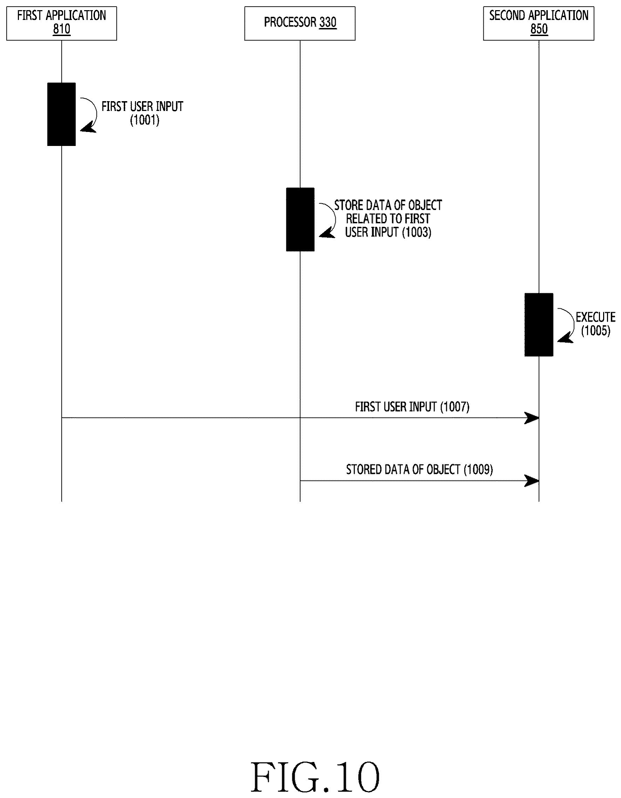

FIG. 8 is a diagram illustrating a first user input received while a first application is executed by an electronic device and a second user input received while the execution of the first application is converted to the execution of a second application, according to an embodiment. FIG. 9 is a diagram illustrating an example of a signal flow related to processing of the first user input received while the first application is executed by the electronic device and the second user input received while the execution of the first application is converted to the execution of the second application, according to an embodiment. FIG. 10 is a diagram illustrating another example of a signal flow related to processing of the first user input received while the first application is executed by the electronic device and the second user input received while the execution of the first application is converted to the execution of the second application, according to an embodiment.

Hereinafter, when the embodiment of FIG. 9 or FIG. 10 is described, the embodiment of FIG. 8 may be referred to together. In addition, the operations of the electronic device mentioned in the embodiment of FIG. 9 or FIG. 10 may be performed sequentially, but may not necessarily be performed sequentially. For example, the order of the operations mentioned in the embodiment of FIG. 9 or FIG. 10 may be changed, or at least two operations may be performed in parallel. In addition, at least some of the operations of the electronic device (or processor) mentioned via the embodiments of FIG. 8, FIG. 9, and FIG. 10 may be identical or similar to the operations of the electronic device (or processor) described via the preceding drawings, and repeated descriptions of the identical or similar operations may be omitted hereinafter.

Referring to FIGS. 8 and 9, in operation 901, while displaying an execution screen 810 of a first application via a display (e.g., display 310 of FIG. 3), at least one processor 330 of an electronic device 101 of an embodiment may receive a first user input 820 on at least one first object 811a among a plurality of objects provided by the execution screen 810 of the first application. For example, the at least one processor 330 may receive a first user input 820 for selecting (e.g., touching, or touching and pressing) the at least one first object 811a and dragging (or dragging and holding) at least one first object 811b grouped by the selection.

In operation 903, the at least one processor 330 of an embodiment may set (or assign) a flag to the first application 810 in which the first user input 820 has been performed, based on receiving the first user input 820. According to an embodiment, the flag set to the first application 810 may function as an identifier that is referred to so as to maintain a process and/or life cycle of the first application 810 such that a drag event of the first user input 820 and clip data about the grouped at least one first object 811b are not lost in the first application 810 even when the first application 810 converts from a foreground state to a background state.

In operation 905, while receiving the first user input 820 (or while the first user input 820 is maintained), the at least one processor 330 of an embodiment may execute a second application 850 in a foreground state, based on a second user input 840. For example, the at least one processor 330 may receive a second user input 840 for accessing a home screen 830 (or application providing a home screen) of the electronic device 101 and selecting (e.g., touching) an object 830a (e.g., icon of the second application 850) included in the home screen 830, and execute the second application 850 corresponding to the object 830a.

In operation 907, the at least one processor 330 of an embodiment may maintain the process and/or life cycle of the first application 810, based on executing the second application 850 (or based on receiving the second user input 840). In this regard, the at least one processor 330 may determine whether the flag has been set to the first application 810, and may control the first application 810 such that the process and/or life cycle of the first application 810 is maintained, based on determining that the flag has been set to the first application 810. In an embodiment, the at least one processor 330 may transfer (or transmit) the drag event of the first user input 820 received via the first application 810 whose process and/or life cycle is maintained, and the clip data about the at least one first object 811b grouped depending on the drag, to the executed second application 850.

According to various embodiments, the at least one processor 330 may execute, in a background state, the first application 810 whose process and/or life cycle is maintained, based on the execution of the second application 850. Alternatively, the at least one processor 330 may reduce the execution screen 810 of the first application whose process and/or life cycle is maintained, to a specified size, display a reduced execution screen 810a of the first application such that the reduced execution screen 810a of the first application at least partially overlaps the home screen 830 and/or the execution screen 850 of the second application, based on a multi-window function of the electronic device 101, and execute the first application 810 in a foreground state.

In operation 909, the at least one processor 330 of an embodiment may receive a first user input 820 on the execution screen 850 of the second application. For example, the at least one processor 330 may receive a first user input 820 for dropping the at least one first object 811b grouped depending on the drag, on the execution screen 850 of the second application. According to an embodiment, the at least one processor 330 may transfer (or transmit) a drop event to the second application 850, based on receiving the first user input 820 for dropping the grouped at least one first object 811b.

In the embodiments of FIGS. 8 and 9, even if the second application is executed while a drag on at least one first object is performed in the first application, the electronic device of an embodiment may maintain a process and/or life cycle of the first application, based on a flag set to the first application. In addition, the electronic device of an embodiment may support performing a drop on the at least one first object in the second application, by preventing the loss of a drag event on the at least one first object, based on the first application whose process and/or life cycle is maintained.

Referring to FIGS. 8 and 10, in operation 1001, while displaying an execution screen 810 of a first application via a display 310, at least one processor 330 of an electronic device 101 of an embodiment may receive a first user input 820 for selecting (e.g., touching, or touching and pressing) at least one first object 811a and dragging (or dragging and holding) at least one first object 811b grouped by the selection.

In operation 1003, the at least one processor 330 of an embodiment may obtain and store original data of each of the grouped at least one first object 811b. For example, the at least one processor 330 may at least temporarily store original data of each of the grouped at least one first object 811b in a storage device (or storage area) integrated into the at least one processor 330 or a storage device (e.g., cache memory) independent from the at least one processor 330. According to an embodiment, the at least temporarily stored original data may be distinguished from clip data about each of the grouped at least one first object 811b. For example, when the first object is referred to as an image, the original data of the first object may mean data of the image itself, and the clip data of the first object may mean metadata of the image.

In operation 1005, while receiving the first user input 820 (or while the first user input 820 is maintained), the at least one processor 330 of an embodiment may execute a second application 850 in a foreground state, based on a second user input 840. According to an embodiment, the second application 850 may be an application that does not receive a drag event of the first user input 820 from the at least one processor 330, as not being executed in a background state while the first application 810 is executed in a foreground state.

According to various embodiments, in operation 1005, the second application 850 may have a state in which, while the at least one processor 330 receives the first user input 820 (or while the first user input 820 is maintained), the second application 850 is executed in a background but an event listener (or event handler) is not executed within the second application 850. For example, the second application 850 may be an application that does not receive a transfer of the drag event of the first user input 820 from the at least one processor 330, as being executed in the background state but the event listener is not executed. In this case, the at least one processor 330 may perform operations 1007 and 1009 described later, based on that the second application 850 converts from the background state to a foreground state and the event listener is executed within the second application 850.

In operation 1007, the at least one processor 330 of an embodiment may receive the first user input 820 on the execution screen 850 of the second application. For example, the at least one processor 330 may receive the first user input 820 for dropping the at least one first object 811b grouped depending on the drag, on the execution screen 850 of the second application.

In operation 1009, the at least one processor 330 of an embodiment may transfer (or transmit) the at least temporarily stored original data to the second application 850, based on receiving the first user input 820 for dropping the grouped at least one first object 811b. For example, while transferring the original data of each of the grouped at least one first object 811b to the second application 850, the at least one processor 330 may control the second application 850 to operate as if the second application 850 received a transfer of a drag event and a drop event on the grouped at least one first object 811b.

In the embodiments of FIGS. 8 and 10, even if the second application is executed while a drag on at least one first object is performed in the first application, the electronic device of an embodiment may support performing a drop on the at least one first object in the second application by using the temporarily stored original data of the at least one first object.

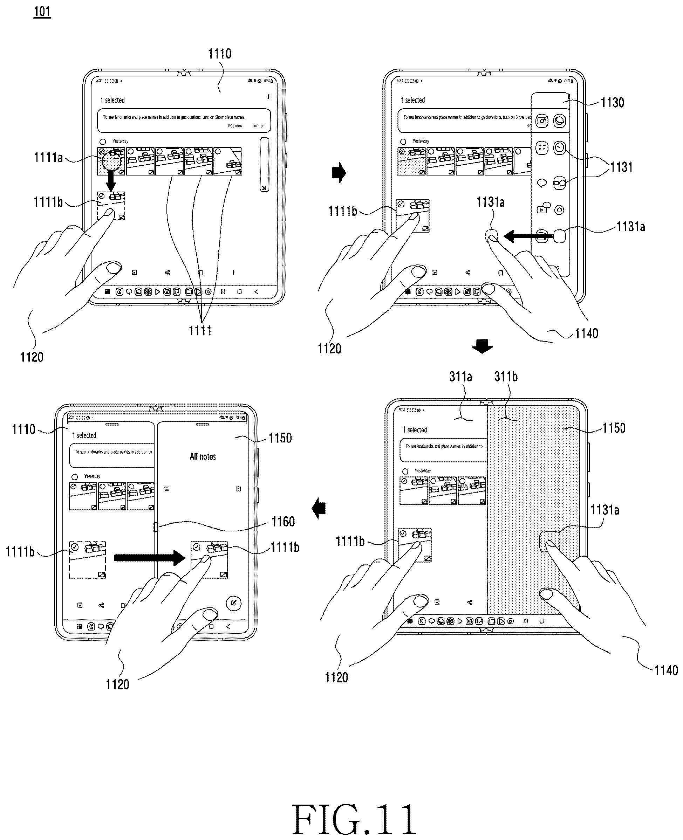

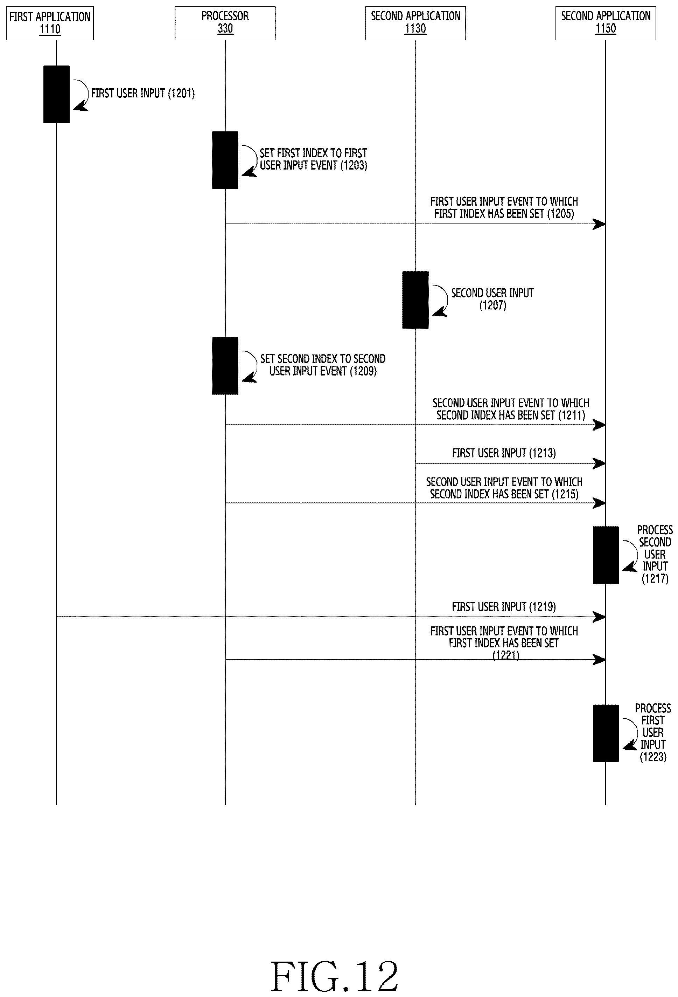

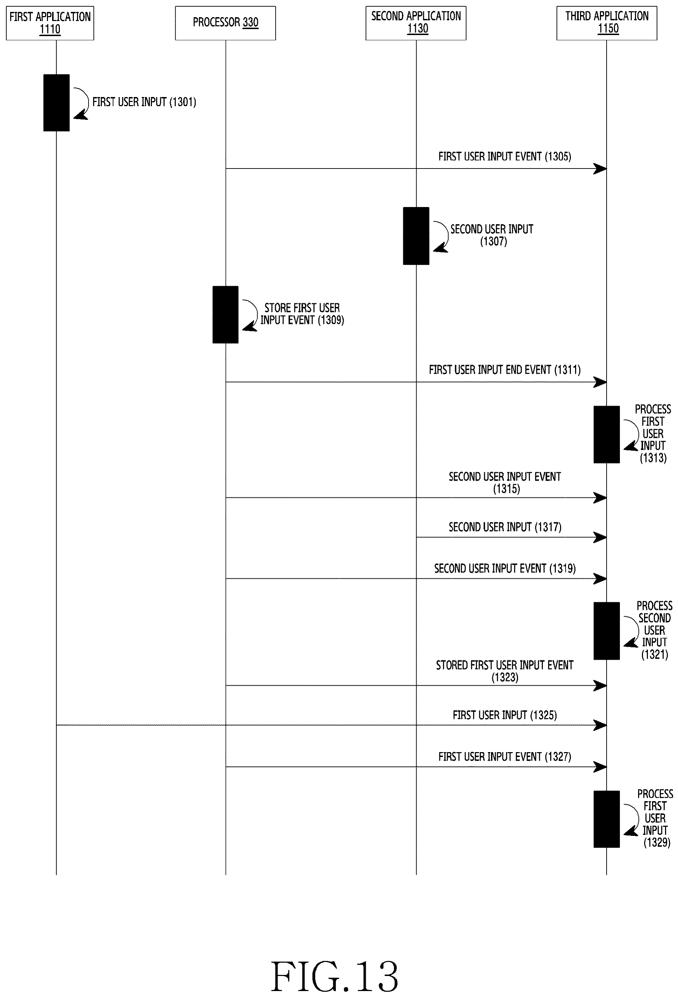

FIG. 11 is a diagram illustrating a first user input received while a first application is executed by an electronic device and a second user input received while a second application is executed, according to an embodiment. FIG. 12 is a diagram illustrating an example of a signal flow related to processing of the first user input received while the first application is executed by the electronic device and the second user input received while the second application is executed, according to an embodiment. FIG. 13 is a diagram illustrating another example of a signal flow related to processing of the first user input received while the first application is executed by the electronic device and the second user input received while the second application is executed, according to an embodiment.

Hereinafter, when the embodiment of FIG. 12 or FIG. 13 is described, the embodiment of FIG. 11 may be referred to together. In addition, the operations of the electronic device mentioned in the embodiment of FIG. 12 or FIG. 13 may be performed sequentially, but may not necessarily be performed sequentially. For example, the order of the operations mentioned in the embodiment of FIG. 12 or FIG. 13 may be changed, or at least two operations may be performed in parallel. In addition, at least some of the operations of the electronic device (or processor) mentioned via the embodiments of FIG. 11, FIG. 12, and FIG. 13 may be identical or similar to the operations of the electronic device (or processor) described via the preceding drawings, and repeated descriptions of the identical or similar operations may be omitted below.

Referring to FIGS. 11 and 12, at least one processor 330 of an electronic device 101 of an embodiment may display an execution screen 1110 of a first application via a display (e.g., display 310 of FIG. 3). In an embodiment, the execution screen 1110 of the first application may include a plurality of first objects 1111 to which a drag-and-drop input may be applied.

In operation 1201, the at least one processor 330 of an embodiment may receive a first user input 1120 on the execution screen 1110 of the first application by using the display 310. For example, the at least one processor 330 may receive a first user input 1120 for selecting at least one first object 1111a among the plurality of first objects 1111 and dragging (or dragging and holding) at least one first object 1111b grouped by the selection.

In operations 1203 and 1205, the at least one processor 330 of an embodiment may set a first index (e.g., index 0) to the first user input 1120, and transfer (or transmit) an event of the first user input 1120 to which the first index has been set, to a third application 1150. For example, the at least one processor 330 may set (or assign) a first index to a drag event of the first user input 1120, and transfer the drag event to which the first index has been set, to the third application 1150. According to an embodiment, the third application 1150 may be an application that may be executed (or activated) in a background state depending on a routine defined on a framework during a boot-up process of the electronic device 101, and support a multi-window function via the display 310.

According to an embodiment, while receiving the first user input 1120 (or while the first user input 1120 is maintained), the at least one processor 330 may execute a second application 1130. For example, based on receiving a specified user input (e.g., swipe) in an edge area of the display 310, the at least one processor 330 may display an execution screen 1130 of the second application on the display 310 such that the execution screen 1130 of the second application at least partially overlaps the execution screen 1110 of the first application. According to an embodiment, the second application 1130 may function as a launcher that supports the execution of at least one other application, and the execution screen of the second application 1130 may include a plurality of second objects 1131 (e.g., application icons) to which a drag-and-drop input may be applied.

In operation 1207, while receiving the first user input 1120 (or while the first user input 1120 is maintained), the at least one processor 330 of an embodiment may receive a second user input 1140 on the execution screen 1130 of the second application. For example, the at least one processor 330 may receive a second user input 1140 for selecting (e.g., touching and pressing) and dragging (or dragging and holding) a second object 1131a among the plurality of second objects 1131.

According to an embodiment, the at least one processor 330 may execute, in a foreground state, the third application 1150 that is being executed in a background state, based on receiving the second user input 1140. For example, the at least one processor 330 may at least temporarily divide (e.g., logically divide) a screen area (or pixel active area) of the display 310 into a first area 311a and a second area 311b, and display at least a portion of the execution screen 1110 of the first application in the first area 311a while displaying the execution screen 1150 (e.g., translucent execution screen) of the third application in the second area 311b. Alternatively, the at least one processor 330 may display the execution screen 1110 of the first application in the first area 311a and the second area 311b, and overlap and display, in the second area 311b, the execution screen 1150 (e.g., translucent execution screen) of the third application as an upper layer with respect to the execution screen 1110 of the first application. Alternatively, the at least one processor 330 may resize the execution screen 1110 of the first application to a size corresponding to the first area 311a, display the resized execution screen 1110 of the first application in the first area 311a, and display the execution screen 1150 (e.g., translucent execution screen) of the third application in the second area 311b.

In operation 1209 and operation 1211, the at least one processor 330 of an embodiment may set a second index (e.g., index 1) to the second user input 1140, and transfer (or transmit) an event of the second user input 1140 to which the second index has been set, to the third application 1150. For example, the at least one processor 330 may set (or assign) a second index to a drag event of the second user input 1140, and transfer the drag event to which the second index has been set, to the third application 1150.

In operation 1213, while receiving the first user input 1120 (while the first user input 1120 is maintained), the at least one processor 330 of an embodiment may receive the second user input 1140 on the execution screen 1150 of the third application. For example, the at least one processor 330 may receive the second user input 1140 for dropping the second object 1131a on the execution screen 1150 of the third application.

In operation 1215, the at least one processor 330 of an embodiment may set (or assign) an index to a drop event of the second user input 1140, based on receiving the second user input 1140 for dropping the second object 1131a. For example, the at least one processor 330 may identically set the second index (e.g., index 1) that has been set to the drag event of the second user input 1140, to the drop event of the second user input 1140, and may transfer (or transmit) the drop event to which the second index has been set, to the third application 1150.

In operation 1217, the at least one processor 330 of an embodiment may control the third application 1150 such that the third application 1150 processes the second user input 1140. For example, the at least one processor 330 may control the third application 1150 such that the third application 1150 recognizes and processes the drag event and drop event, to which the second index has been set, of the second user input 1140, as one drag-and-drop input. In addition, the at least one processor 330 may control the third application 1150 such that the third application 1150 displays an execution result of a fourth application (e.g., execution screen of the fourth application) corresponding to the second object 1131a on the execution screen 1150 of the third application by using clip data of the second object 1131a obtained from the at least one processor 330. Alternatively, the at least one processor 330 may control each of the third application 1150 and the fourth application such that the third application 1150 transfers (or transmits) the clip data of the second object 1131a to the fourth application corresponding to the second object 1131a, and such that the fourth application displays the execution screen, based on the clip data of the second object 1131a. According to an embodiment, the at least one processor 330 may provide a control object (e.g., split-bar) to a border area 1160 between at least a portion of the execution screen 1110 of the first application displayed in the first area 311a and the execution screen 1150 of the third application (e.g., execution screen 1150 of the third application that displays the execution result of the fourth application) displayed in the second area 311b. The at least one processor 330 may enlarge or reduce the size of the execution screen 1110 of the first application or the execution screen 1150 of the third application (e.g., execution screen 1150 of the third application that displays the execution result of the fourth application), based on receiving a user input on the control object.

In operation 1219, the at least one processor 330 of an embodiment may receive the first user input 1120 on the execution screen 1150 of the third application (e.g., execution screen 1150 of the third application that displays the execution result of the fourth application). For example, the at least one processor 330 may receive the first user input 1120 for dropping the grouped at least one first object 1111b on the execution screen 1150 of the third application.

In operation 1221, the at least one processor 330 of an embodiment may set (or assign) an index to a drop event of the first user input 1120, based on receiving the first user input 1120 for dropping the grouped at least one first object 1111b. For example, the at least one processor 330 may identically set the first index (e.g., index 0) that has been set to the drag event of the first user input 1120, to the drop event of the first user input 1120, and may transfer (or transmit) the drop event to which the first index has been set, to the third application 1150.

In operation 1223, the at least one processor 330 of an embodiment may control the third application 1150 such that the third application 1150 processes the first user input 1120. For example, the at least one processor 330 may control the third application 1150 such that the third application 1150 recognizes and processes the drag event and drop event, to which the first index has been set, of the first user input 1120, as one drag-and-drop input. In addition, the at least one processor 330 may control the third application 1150 such that the third application 1150 applies (e.g., moves, copies, and/or attaches) content (e.g., image, video, text, and/or file) corresponding to each of the grouped at least one first object 1111b to the execution screen 1150 of the third application (e.g., execution screen 1150 of the third application that displays the execution result of the fourth application) by using the clip data of each of the grouped at least one first object 1111b obtained from the at least one processor 330. Alternatively, the at least one processor 330 may control each of the third application 1150 and the fourth application such that the third application 1150 transfers (or transmits) the clip data of each of the grouped at least one first object 1111b to the fourth application, and such that the fourth application applies (e.g., moves, copies, and/or attaches) content (e.g., image, video, text, and/or file) corresponding to each of the grouped at least one first object 1111b to the execution screen of the fourth application (e.g., execution screen of the fourth application displayed via the execution screen 1150 of the third application), based on the clip data.

In the embodiments of FIGS. 11 and 12, even if a drag on a second object is performed in the second application while a drag on a first object is performed in the first application, the electronic device of an embodiment may support distinguishing and processing of a drag-and-drop input on the first object and a drag-and-drop input on the second object in the third application, by setting a first index to a drag event and drop event on the first object and setting a second index different from the first index to a drag event and drop event on the second object.

Referring to FIGS. 11 and 13, in operation 1301, while displaying an execution screen 1110 of a first application via a display 310, at least one processor 330 of an electronic device 101 of an embodiment may receive a first user input 1120 for selecting (e.g., touching, or touching and pressing) at least one first object 1111a and dragging (or dragging and holding) at least one first object 1111a grouped by the selection.

In operation 1305, the at least one processor 330 of an embodiment may transfer (or transmit) a drag event of the first user input 1120 to a third application 1150, based on the receiving of the first user input 1120. For example, the at least one processor 330 may transfer a drag event of the first user input 1120 to the third application 1150 (e.g., application supporting a multi-window function) that is being executed (or activated) in a background state depending on a routine defined on a framework during a boot-up process of the electronic device 101.

According to an embodiment, while receiving the first user input 1120 (or while the first user input 1120 is maintained), the at least one processor 330 may execute a second application 1130. For example, the at least one processor 330 may display an execution screen 1130 of the second application (e.g., launcher application supporting the execution of other applications) on the display 310 such that the execution screen 1130 of the second application at least partially overlaps the execution screen 1110 of the first application, based on receiving a specified user input (e.g., swipe) in an edge area of the display 310.

In operation 1307, while receiving the first user input 1120 (or while the first user input 1120 is maintained), the at least one processor 330 of an embodiment may receive a second user input 1140 on the execution screen 1130 of the second application. For example, the at least one processor 330 may receive a second user input 1140 for selecting (e.g., touching and pressing) and dragging (or dragging and holding) a second object 1131a included in the execution screen 1130 of the second application. According to an embodiment, the at least one processor 330 may execute, in a foreground state, the third application 1150 that is being executed in a background state, based on receiving the second user input 1140.

In operation 1309 and operation 1311, the at least one processor 330 of an embodiment may store the drag event of the first user input 1120, based on receiving the second user input 1140, and may transfer (or transmit) an end event of a drag of the first user input 1120 to the third application 1150. For example, the at least one processor 330 may temporarily store the drag event of the first user input 1120 in a framework area of the first application 1110, and generate and transfer an end event indicating the end of a drag of the first user input 1120 to the third application 1150. According to various embodiments, the at least one processor 330 may display at least one first object 1111a that is grouped depending on the first user input 1120, with a specified display effect (e.g., dim processing or blur processing), based on transferring the drag end event to the third application 1150.

In operation 1313, the at least one processor 330 of an embodiment may control the third application 1150 such that the third application 1150 processes the first user input 1120. For example, the at least one processor 330 may control the third application 1150 such that the third application 1150 recognizes as if the drag event of the first user input 1120 was ended, and processes to end the drag event, based on the end event of the drag of the first user input 1120.

In operation 1315, the at least one processor 330 of an embodiment may transfer (or transmit) an event of the second user input 1140 to the third application 1150, based on transferring the end event of the drag of the first user input 1120 to the third application 1150. For example, the at least one processor 330 may transfer a drag event of the second user input 1140 on the second object 1131a to the third application 1150.

In operation 1317, while receiving the first user input 1120 (or while the first user input 1120 is maintained), the at least one processor 330 of an embodiment may receive the second user input 1140 on the execution screen 1150 of the third application. For example, the at least one processor 330 may receive the second user input 1140 for dropping the second object 1131a on the execution screen 1150 of the third application.

In operations 1319 and 1321, the at least one processor 330 of an embodiment may transfer (or transmit) a drop event of the second user input 1140 to the third application 1150, based on receiving the second user input 1140 for dropping the second object 1131a, and control the third application 1150 such that the third application 1150 processes the second user input 1140. For example, the at least one processor 330 may control the third application 1150 such that the third application 1150 displays an execution result of a fourth application (e.g., execution screen of the fourth application) corresponding to the second object 1131a on the execution screen 1150 of the third application by using the drag event and drop event of the second user input 1140 and the clip data of the second object 1131a obtained from the at least one processor 330.

In operation 1323, the at least one processor 330 of an embodiment may transfer (or transmit) the drag event, which is at least temporarily stored in the framework area of the first application 1110, of the first user input 1120, to the third application 1150, based on transferring the drop event of the second user input 1140 to the third application 1150. For example, the at least one processor 330 may transfer the at least temporarily stored drag event of the first user input 1120 to the third application 1150 such that the third application 1150 recognizes as if the drag event of the first user input 1120 was started.

In operations 1325 and 1327, the at least one processor 330 of an embodiment may receive the first user input 1120 on the execution screen 1150 of the third application (e.g., execution screen 1150 of the third application that displays the execution result of the fourth application), and transfer (or transmit) the event of the first user input 1120 to the third application 1150. For example, the at least one processor 330 may transfer the drop event of the first user input 1120 to the third application 1150, based on receiving the first user input 1120 for dropping the grouped at least one first object 1111b on the execution screen 1150 of the third application.

In operation 1329, the at least one processor 330 of an embodiment may control the third application 1150 such that the third application 1150 processes the first user input 1120. For example, the at least one processor 330 may control the third application 1150 such that the third application 1150 applies (e.g., moves, copies, and/or attaches) content (e.g., image, video, text, and/or file) corresponding to each of the grouped at least one first object 1111b to the execution screen 1150 of the third application (e.g., execution screen 1150 of the third application that displays the execution result of the fourth application), by using the at least temporarily stored drag event of the first user input 1120, the drop event of the first user input 1120, and the clip data of each of the grouped at least one first object 1111b obtained from the at least one processor 330.

In the embodiments of FIGS. 11 and 13, even if a drag on a second object is performed in the second application while a drag on a first object is performed in the first application, the electronic device of an embodiment may support sequential processing of a drag-and-drop input on the first object after primary processing of a drag-and-drop input on the second object, by at least temporarily storing and ending a drag event on the first object.

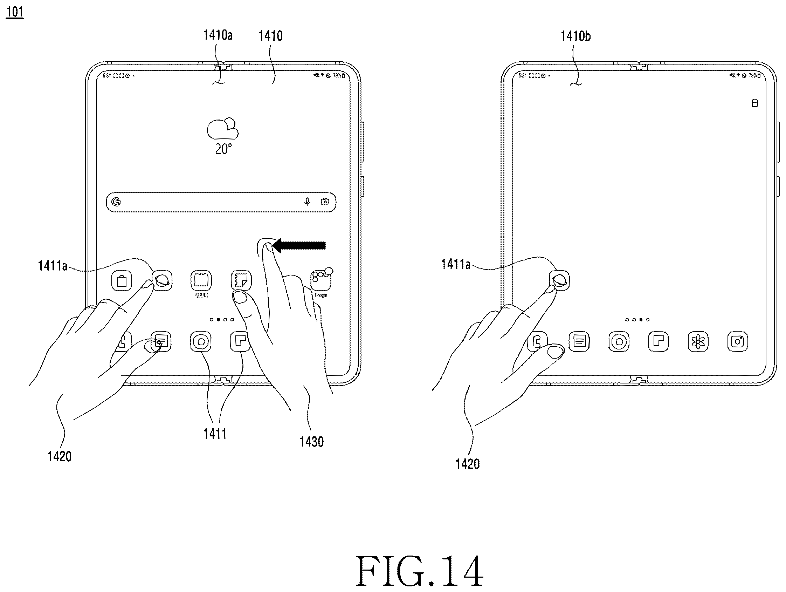

FIG. 14 is a diagram illustrating a first operation scenario of an electronic device for processing a plurality of user inputs according to an embodiment.

Referring to FIG. 14, at least one processor (e.g., at least one processor 330 of FIG. 3) of an electronic device 101 of an embodiment may receive a first user input 1420 for selecting (e.g., touching and pressing) a first object 1411a (e.g., application icon) among a plurality of objects 1411 provided by an execution screen 1410 of a first application (e.g., home screen of the electronic device 101) and dragging the selected first object 1411a, on a first page (e.g., 1410a) of the execution screen 1410 of the first application. According to an embodiment, the execution screen 1410 of the first application may consist of a plurality of pages 1410a and 1410b that may be converted in response to a specified user input (e.g., swipe).

In an embodiment, while receiving the first user input 1420 (or while the first user input 1420 is maintained), the at least one processor 330 may receive a second user input 1430 on the execution screen 1410 of the first application. For example, the at least one processor 330 may receive a swipe-based second user input 1430 for converting a first page (e.g., 1410a) of the execution screen 1410 of the first application to a second page (e.g., 1410b).

According to an embodiment, the at least one processor 330 may convert the first page of the execution screen 1410 of the first application to the second page, based on receiving the second user input 1430, and receive a first user input 1420 for dropping the first object 1411a on the converted second page. In an embodiment, the at least one processor 330 may display the first object 1411a (e.g., move the position of the first object 1411a) on the second page of the execution screen 1410 of the first application, based on a drop event of the first user input 1420.

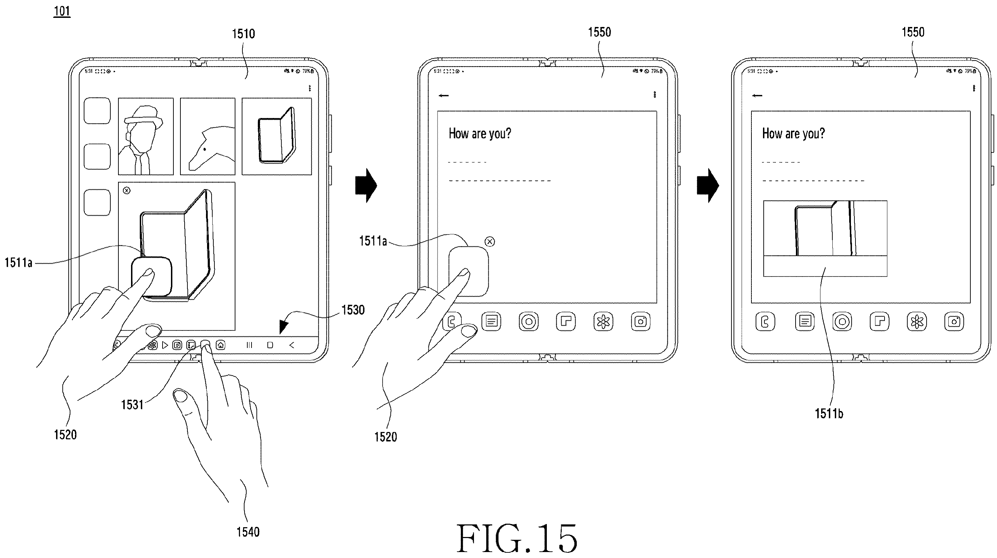

FIG. 15 is a diagram illustrating a second operation scenario of an electronic device for processing a plurality of user inputs according to an embodiment.

Referring to FIG. 15, at least one processor (e.g., at least one processor 330 of FIG. 3) of an electronic device 101 of an embodiment may receive a first user input 1520 for dragging grouped at least one first object 1511a on an execution screen 1510 of a first application. In an embodiment, while receiving the first user input 1520 (or while the first user input 1520 is maintained), the at least one processor 330 may receive a second user input 1540 for touching a second object 1531 (e.g., application icon) on an execution screen 1530 (or user interface) of a second application (e.g., application supporting a task bar).

In an embodiment, the at least one processor 330 may display, in a foreground state, an execution screen 1550 of a third application corresponding to the second object 1531, based on receiving the second user input 1540. According to an embodiment, the at least one processor 330 may receive a first user input 1520 for dropping the grouped at least one first object 1511a on the execution screen 1550 of the third application, and in response to this, may apply (e.g., move, copy, and/or attach) content 1511b corresponding to each of the grouped at least one first object 1511a to the execution screen 1550 of the third application.

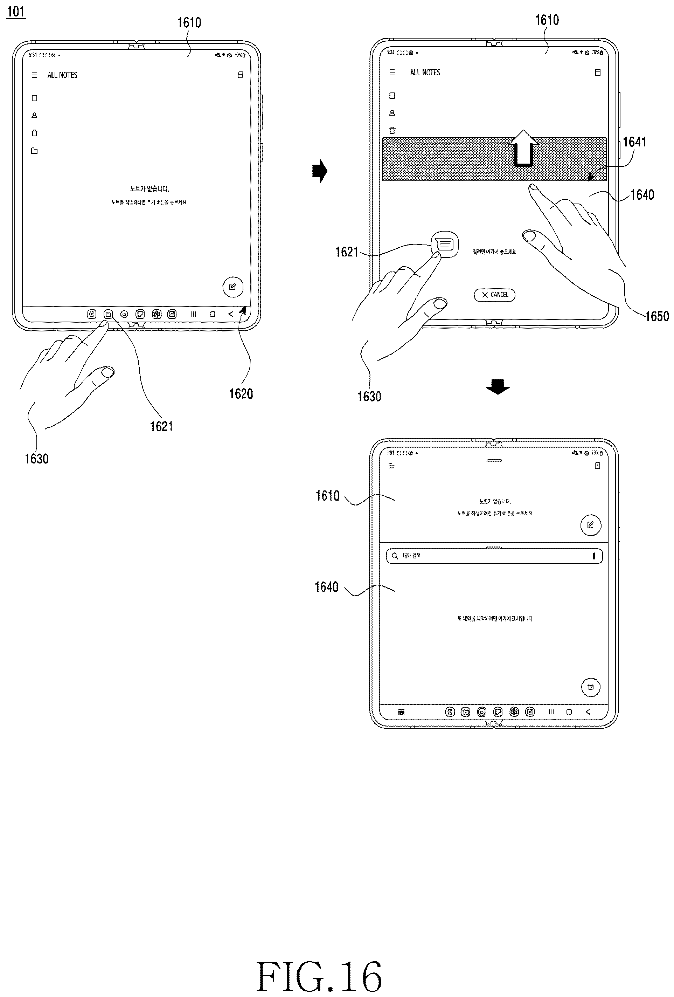

FIG. 16 is a diagram illustrating a third operation scenario of an electronic device for processing a plurality of user inputs according to an embodiment.

Referring to FIG. 16, at least one processor (e.g., at least one processor 330 of FIG. 3) of an electronic device 101 of an embodiment may display an execution screen 1610 of a first application and an execution screen 1620 of a second application (e.g., application supporting a task bar) via a display (e.g., display 310 of FIG. 3).

According to an embodiment, the at least one processor 330 may receive a first user input 1630 for dragging a first object 1621 (e.g., application icon) included in the execution screen 1620 of the second application, and may display an execution screen 1640 of a third application (e.g., application supporting a multi-window function) that is being executed in a background state, in a foreground state, based on receiving the first user input 1630. For example, while displaying at least a portion of the execution screen 1610 of the first application, the at least one processor 330 may display the execution screen 1640 of the third application. Alternatively, the at least one processor 330 may display the execution screen 1610 of the first application, and overlap and display the execution screen 1640 of the third application of a specified size as an upper layer with respect to the execution screen 1610 of the first application.

In an embodiment, while receiving the first user input 1630 for dragging the first object 1621 (or while the first user input 1630 for dragging the first object 1621 is maintained), the at least one processor 330 may receive a second user input 1650 on a boundary 1641 between the execution screen 1610 of the first application and the execution screen 1640 of the third application. For example, the at least one processor 330 may receive a second user input 1650 for dragging the boundary 1641.

In an embodiment, the at least one processor 330 may adjust the size (e.g., enlarge or reduce) of the execution screen 1640 of the third application, based on receiving the second user input 1650, and receive a first user input 1630 for dropping the first object 1621 on the size-adjusted execution screen 1640 of the third application. According to an embodiment, the at least one processor 330 may display an execution result of a fourth application (e.g., execution screen of the fourth application) corresponding to the first object 1621 on the size-adjusted execution screen 1640 of the third application, based on receiving the first user input 1630 for dropping the first object 1621.

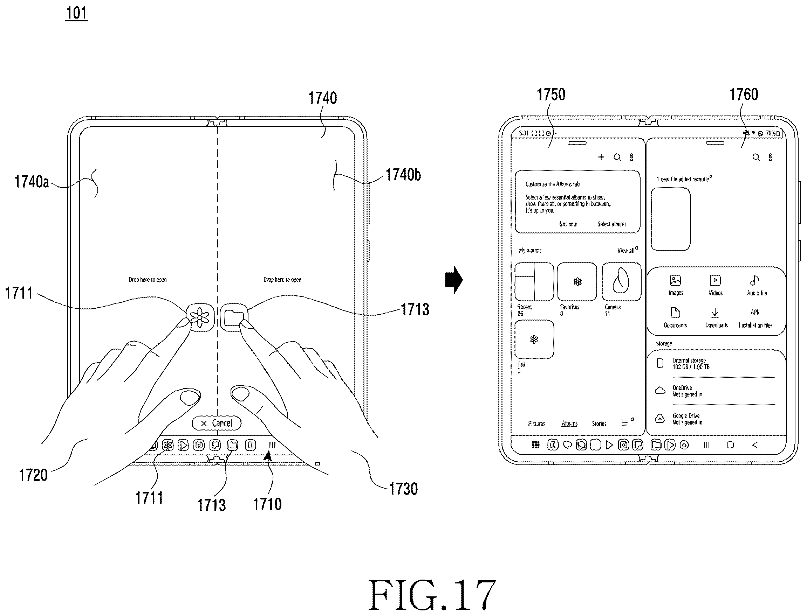

FIG. 17 is a diagram illustrating a fourth operation scenario of an electronic device for processing a plurality of user inputs according to an embodiment.

Referring to FIG. 17, at least one processor (e.g., at least one processor 330 of FIG. 3) of an electronic device 101 of an embodiment may receive a first user input 1720 and a second user input 1730 on an execution screen 1710 (or user interface) of a first application (e.g., application supporting a task bar). For example, the at least one processor 330 may receive a first user input 1720 for dragging a first object 1711 included in the execution screen 1710 of the first application and a second user input 1730 for dragging a second object 1713 included in the execution screen 1710 of the first application, substantially simultaneously or within a specified time interval.

According to an embodiment, the at least one processor 330 may display an execution screen 1740 of a second application (e.g., application supporting a multi-window function) that is being executed in a background state, in a foreground state, based on receiving the first user input 1720 and the second user input 1730. According to an embodiment, the at least one processor 330 may display the execution screen 1740 of the second application such that the execution screen 1740 of the second application includes a first area 1740a and a second area 1740b visually distinct from each other, based on receiving the first user input 1720 and the second user input 1730 substantially simultaneously or within the specified time interval.

According to an embodiment, the at least one processor 330 may receive a first user input 1720 for dropping the first object 1711 and a second user input 1730 for dropping the second object 1713, on the execution screen 1740 of the second application. For example, the at least one processor 330 may receive a first user input 1720 for dropping the first object 1711 in the first area 1740a within a specified distance from a boundary between the first area 1740a and the second area 1740b, and may receive a second user input 1730 for dropping the second object 1713 in the second area 1740b within the specified distance from the boundary.

According to an embodiment, the at least one processor 330 may display an execution result 1750 of a third application (e.g., execution screen of the third application) corresponding to the first object 1711 in the first area 1740a of the execution screen 1740 of the second application, and display an execution result 1760 of a fourth application (e.g., execution screen of the fourth application) corresponding to the second object 1713 in the second area 1740b of the execution screen 1740 of the second application, based on receiving the first user input 1720 for dropping the first object 1711 and the second user input 1730 for dropping the second object 1713.

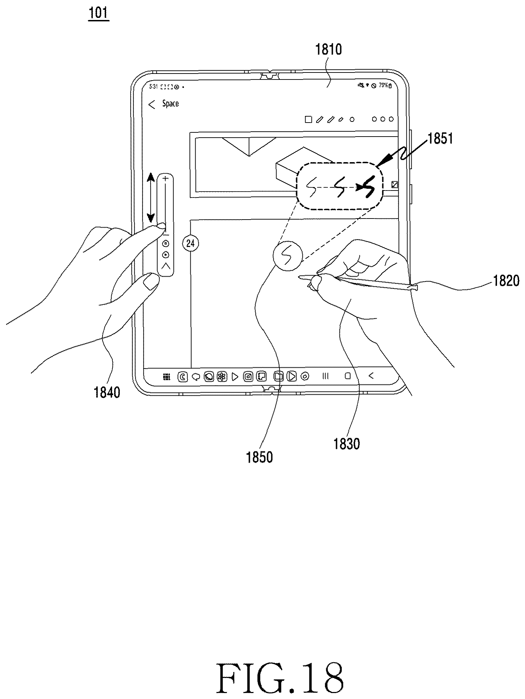

FIG. 18 is a diagram illustrating a fifth operation scenario of an electronic device for processing a plurality of user inputs according to an embodiment.

Referring to FIG. 18, at least one processor (e.g., at least one processor 330 of FIG. 3) of an electronic device 101 of an embodiment may receive a first user input 1830 on an execution screen 1810 of a first application. For example, the at least one processor 330 may receive a hover or touch - based first user input 1830 that uses an electronic pen 1820.

According to an embodiment, while receiving the first user input 1830 (or while the first user input 1830 is maintained), the at least one processor 330 may receive a drag-based second user input 1840 on the execution screen 1810 of the first application. In an embodiment, the at least one processor 330 may display a visual object 1850 indicating the thickness of an input by the electronic pen 1820 currently set to the electronic device 101, based on receiving the second user input 1840, and display the visual object 1850 variably as in example 1851 depending on a drag degree of the second user input 1840 directed in one direction.

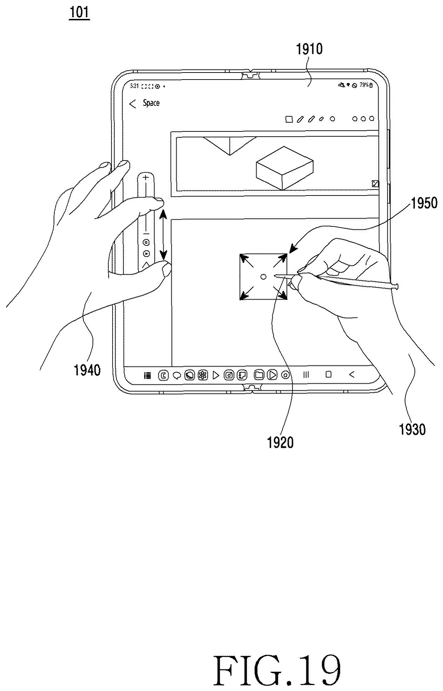

FIG. 19 is a diagram illustrating a sixth operation scenario of an electronic device for processing a plurality of user inputs according to an embodiment.

Referring to FIG. 19, at least one processor (e.g., at least one processor 330 of FIG. 3) of an electronic device 101 of an embodiment may receive a first user input 1930 on an execution screen 1910 of a first application. For example, the at least one processor 330 may receive a hover or touch - based first user input 1930 that uses an electronic pen 1920.

According to an embodiment, while receiving the first user input 1930 (or while the first user input 1930 is maintained), the at least one processor 330 may receive a pinch zoom - based second user input 1940 on the execution screen 1910 of the first application. According to an embodiment, the at least one processor 330 may enlarge or reduce a screen area 1950 of a specified size centered on a pen tip of the electronic pen 1920, based on receiving the second user input 1940.

An electronic device of an embodiment of the disclosure may include a display 240 or 310, a memory 320, and at least one processor 330 electrically connected to the display and the memory.

According to an embodiment of the disclosure, the at least one processor may be configured to control the display to display an execution screen 410, 810, or 1110 of a first application including at least one first object among a plurality of applications stored in the memory, receive a user input for dragging the at least one first object via the display, while receiving the user input for dragging the at least one first object, control the display to display an execution screen 830 or 1130 of a second application including at least one second object among the plurality of applications stored in the memory, receive a second user input on the at least one second object via the display, control the display to display an execution screen 850 or 1150 of a third application, based on receiving the second user input, and receive a user input for dropping the at least one first object on the execution screen of the third application via the display.

According to an embodiment of the disclosure, the user input for dragging the at least one first object may be a first portion of a first user input for performing a first drag and drop of the at least one first object, and the user input for dropping the at least one first object may be a second portion of the first user input for performing the first drag-and-drop of the at least one first object.

According to an embodiment of the disclosure, the at least one processor may be configured to receive a user input for dragging the at least one second object via the display, control the display to display the execution screen of the third application, based on receiving the user input for dragging the at least one second object, and receive a user input for dropping the at least one second object on the execution screen of the third application via the display.

According to an embodiment of the disclosure, the user input for dragging the at least one second object may be a first portion of the second user input for performing a second drag-and-drop of the at least one second object, and the user input for dropping the at least one second object may be a second portion of the second user input for performing the second drag-and-drop of the at least one second object.

According to an embodiment of the disclosure, the at least one processor may be configured to control the display to display an execution result of a fourth application corresponding to the at least one second object on the execution screen of the third application, based on receiving the user input for dropping the at least one second object on the execution screen of the third application.

According to an embodiment of the disclosure, the at least one processor may be configured to control the third application such that the third application transfers information related to the at least one first object to the fourth application, based on receiving the user input for dropping the at least one first object on the execution screen of the third application.

According to an embodiment of the disclosure, the at least one processor may be configured to control the display to display the execution screen of the third application while displaying at least a portion of the execution screen of the first application, based on receiving the second user input.

According to an embodiment of the disclosure, the at least one processor may be configured to set a first index to an event of the user input for dragging the at least one first object, and set a second index to an event of the user input for dragging the at least one second object.

According to an embodiment of the disclosure, the at least one processor may be configured to control the third application such that the third application processes the second user input for performing the second drag-and-drop of the at least one second object, based on the second index, and processes the first user input for performing the first drag-and-drop of the at least one first object, based on the first index.

According to an embodiment of the disclosure, the at least one processor may be configured to at least temporarily store an event of the user input for dragging the at least one first object, based on receiving the user input for dragging the at least one second object, and transfer an event indicating the end of the user input for dragging the at least one first object to the third application, based on at least temporarily storing the event of the user input for dragging the at least one first object.

According to an embodiment of the disclosure, the at least one processor may be configured to transfer an event of the user input for dropping the at least one second object to the third application, based on receiving the user input for dropping the at least one second object, and transfer the at least temporarily stored event of the user input for dragging the at least one first object to the third application, based on transferring the event of the user input for dropping the at least one second object to the third application.

According to an embodiment of the disclosure, the at least one processor may be configured to control the third application such that the third application does not process the user input for dragging the at least one first object, based on receiving the transfer of the event indicating the end of the user input for dragging the at least one first object, and processes the user input for dragging the at least one first object, based on receiving the transfer of the at least temporarily stored event of the user input for dragging the at least one first object.

A method for processing a plurality of user inputs in an electronic device 101 of an embodiment of the disclosure may include controlling (1410) a display 240 or 310 of the electronic device to display an execution screen 410, 810, or 1110 of a first application including at least one first object among a plurality of applications stored in a memory 320 of the electronic device, receiving (1420) a user input for dragging the at least one first object via the display, while receiving the user input for dragging the at least one first object, controlling (1430) the display to display an execution screen 830 or 1130 of a second application including at least one second object among the plurality of applications stored in the memory, receiving (1440) a second user input on the at least one second object via the display, controlling (1450) the display to display an execution screen 850 or 1150 of a third application, based on receiving the second user input, and receiving (1460) a user input for dropping the at least one first object on the execution screen of the third application via the display.

According to an embodiment of the disclosure, the user input for dragging the at least one first object may be a first portion of a first user input for performing a first drag-and-drop of the at least one first object, and the user input for dropping the at least one first object may be a second portion of the first user input for performing the first drag-and-drop of the at least one first object.

According to an embodiment of the disclosure, receiving the second user input on the at least one second object may include receiving a user input for dragging the at least one second object via the display.

According to an embodiment of the disclosure, displaying the execution screen of the third application may include controlling the display to display the execution screen of the third application, based on receiving the user input for dragging the at least one second object, and receiving a user input for dropping the at least one second object on the execution screen of the third application via the display.

According to an embodiment of the disclosure, the user input for dragging the at least one second object may be a first portion of the second user input for performing a second drag-and-drop of the at least one second object, and the user input for dropping the at least one second object may be a second portion of the second user input for performing the second drag-and-drop of the at least one second object.

According to an embodiment of the disclosure, receiving the user input for dropping the at least one second object on the execution screen of the third application may include controlling the display to display an execution result of a fourth application corresponding to the at least one second object on the execution screen of the third application.

According to an embodiment of the disclosure, receiving the user input for dropping the at least one first object on the execution screen of the third application may include controlling the third application such that the third application transfers information related to the at least one first object to the fourth application.

According to an embodiment of the disclosure, displaying the execution screen of the third application may include controlling the display to display the execution screen of the third application while displaying at least a portion of the execution screen of the first application.

According to an embodiment of the disclosure, the method for processing the plurality of user inputs may further include setting a first index to an event of the user input for dragging the at least one first object, and setting a second index to an event of the user input for dragging the at least one second object.

According to an embodiment of the disclosure, the method for processing the plurality of user inputs may further include controlling the third application such that the third application processes the second user input for performing the second drag-and-drop of the at least one second object, based on the second index, and processes the first user input for performing the first drag-and-drop of the at least one first object, based on the first index.

According to an embodiment of the disclosure, receiving the user input for dragging the at least one second object may include at least temporarily store an event of the user input for dragging the at least one first object, and transferring an event indicating the end of the user input for dragging the at least one first object to the third application.

According to an embodiment of the disclosure, receiving the user input for dropping the at least one second object may include transferring an event of the user input for dropping the at least one second object to the third application, and transferring the at least temporarily stored event of the user input for dragging the at least one first object to the third application.

According to an embodiment of the disclosure, the method for processing the plurality of user inputs may further include controlling the third application such that the third application does not process the user input for dragging the at least one first object, based on receiving the transfer of the event indicating the end of the user input for dragging the at least one first object, and processes the user input for dragging the at least one first object, based on receiving the transfer of the at least temporarily stored event of the user input for dragging the at least one first object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a memory; and
at least one processor electrically connected to the display and the memory,
wherein the at least one processor is configured to:
control the display to display an execution screen of a first application comprising at least one first object among a plurality of applications stored in the memory;
receive a user input for dragging the at least one first object via the display, wherein the user input for dragging the at least one first object is a first portion of a first user input for performing a first drag and drop of the at least one first object;
while receiving the user input for dragging the at least one first object, control the display to display an execution screen of a second application comprising at least one second object among the plurality of applications stored in the memory;
receive a second user input on the at least one second object via the display;
control the display to display an execution screen of a third application, based on receiving the second user input; and
receive a user input for dropping the at least one first object on the execution screen of the third application via the display, wherein the user input for dropping the at least one first object is a second portion of the first user input for performing the first drag-and-drop of the at least one first object.

2. The electronic device of claim 1, wherein the at least one processor is configured to:
receive a user input for dragging the at least one second object via the display, wherein the user input for dragging the at least one second object is a first portion of the second user input for performing a second drag-and-drop of the at least one second object;
control the display to display the execution screen of the third application, based on receiving the user input for dragging the at least one second object; and
receive a user input for dropping the at least one second object on the execution screen of the third application via the display, wherein the user input for dropping the at least one second object is a second portion of the second user input for performing the second drag-and-drop of the at least one second object.

3. The electronic device of claim 2, wherein the at least one processor is configured to control the display to display an execution result of a fourth application corresponding to the at least one second object on the execution screen of the third application, based on receiving the user input for dropping the at least one second object on the execution screen of the third application.

4. The electronic device of claim 3, wherein the at least one processor is configured to control the third application such that the third application transfers information related to the at least one first object to the fourth application, based on receiving the user input for dropping the at least one first object on the execution screen of the third application.

5. The electronic device of claim 1, wherein the at least one processor is configured to control the display to display the execution screen of the third application while displaying at least a portion of the execution screen of the first application, based on receiving the second user input.

6. The electronic device of claim 2, wherein the at least one processor is configured to:
set a first index to an event of the user input for dragging the at least one first object; and
set a second index to an event of the user input for dragging the at least one second object.

7. The electronic device of claim 6, wherein the at least one processor is configured to
control the third application such that the third application processes the second user input for performing the second drag-and-drop of the at least one second object, based on the second index, and processes the first user input for performing the first drag-and-drop of the at least one first object, based on the first index.

8. The electronic device of claim 2, wherein the at least one processor is configured to:
at least temporarily store an event of the user input for dragging the at least one first object, based on receiving the user input for dragging the at least one second object; and
transfer an event indicating the end of the user input for dragging the at least one first object to the third application, based on at least temporarily storing the event of the user input for dragging the at least one first object.

9. The electronic device of claim 8, wherein the at least one processor is configured to:
transfer an event of the user input for dropping the at least one second object to the third application, based on receiving the user input for dropping the at least one second object; and
transfer the at least temporarily stored event of the user input for dragging the at least one first object to the third application, based on transferring the event of the user input for dropping the at least one second object to the third application.

10. The electronic device of claim 9, wherein the at least one processor is configured to
control the third application such that the third application does not process the user input for dragging the at least one first object, based on receiving the transfer of the event indicating the end of the user input for dragging the at least one first object, and processes the user input for dragging the at least one first object, based on receiving the transfer of the at least temporarily stored event of the user input for dragging the at least one first object.

11. A method for processing a plurality of user inputs in an electronic device, the method comprising:
controlling a display of the electronic device to display an execution screen of a first application comprising at least one first object among a plurality of applications stored in a memory of the electronic device;
receiving a user input for dragging the at least one first object via the display, wherein the user input for dragging the at least one first object is a first portion of a first user input for performing a first drag-and-drop of the at least one first object;
while receiving the user input for dragging the at least one first object, controlling the display to display an execution screen of a second application comprising at least one second object among the plurality of applications stored in the memory;
receiving a second user input on the at least one second object via the display; controlling the display to display an execution screen of a third application, based on receiving the second user input; and
receiving a user input for dropping the at least one first object on the execution screen of the third application via the display, wherein the user input for dropping the at least one first object is a second portion of the first user input for performing the first drag-and-drop of the at least one first object.

12. The method of claim 11, wherein receiving the second user input on the at least one second object comprises
receiving a user input for dragging the at least one second object via the display, wherein the user input for dragging the at least one second object is a first portion of the second user input for performing a second drag-and-drop of the at least one second object, and
wherein displaying the execution screen of the third application comprises:
controlling the display to display the execution screen of the third application, based on receiving the user input for dragging the at least one second object; and
receiving a user input for dropping the at least one second object on the execution screen of the third application via the display, wherein the user input for dropping the at least one second object is a second portion of the second user input for performing the second drag-and-drop of the at least one second object.

13. The method of claim 12, wherein receiving the user input for dropping the at least one second object on the execution screen of the third application comprises controlling the display to display an execution result of a fourth application corresponding to the at least one second object on the execution screen of the third application.

14. The method of claim 13, wherein receiving the user input for dropping the at least one first object on the execution screen of the third application comprises controlling the third application such that the third application transfers information related to the at least one first object to the fourth application.

15. The method of claim 11, wherein displaying the execution screen of the third application comprises
controlling the display to display the execution screen of the third application while displaying at least a portion of the execution screen of the first application.
